Europäisches Patentamt

European Patent Office

Office européen des brevets

(11) Veröffentlichungsnummer: **0 214 415**
**A2**

(12) # EUROPÄISCHE PATENTANMELDUNG

(21) Anmeldenummer: **86109871.3**

(51) Int. Cl.⁴: **B23Q 3/08**

(22) Anmeldetag: **18.07.86**

(30) Priorität: **07.09.85 DE 3532020**

(43) Veröffentlichungstag der Anmeldung:
**18.03.87 Patentblatt 87/12**

(84) Benannte Vertragsstaaten:
**AT BE CH DE FR GB IT LI NL SE**

(71) Anmelder: **Horst Witte Entwicklungs- und Vertriebs-KG**

**D-2122 Bleckede(DE)**

(72) Erfinder: **Horst Witte**

**D-2122 Bleckede(DE)**

(74) Vertreter: **von Raffay, Vincenz, Dipl.-Ing. et al
Patentanwälte Raffay, Fleck & Partner
Postfach 32 32 17
D-2000 Hamburg 13(DE)**

(54) **Vorrichtung zum Aufspannen von Werkstücken.**

(57) Die Vorrichtung zum Aufspannen von Werkstücken aus den unterschiedlichsten Materialien und in den kompliziertesten Formen besteht aus einem Grundkörper und aus Spannmitteln, die durch mehrfach benutzbare Klebefolien 3 gebildet sind. Diese Klebefolien 3 sind aus einer Stellung oberhalb der Aufnahmefläche des Grundkörpers 1 in eine Stellung unterhalb dieser Aufnahmefläche bewegbar. In der ersten Stellung wird das Werkstück beispielsweise durch Andrücken sicher befestigt. Dann wird die Klebefolie in die Ebene der Aufspannfläche abgesenkt, so daß das Werkstück auf der Aufspannfläche aufliegt und hier sicher und fest zur Bearbeitung abgestützt wird. Gleichzeitig hält die Klebefolie das Werkstück in dieser Bearbeitungsstellung fest. Wenn die Bearbeitung beendet ist, wird die Klebefolie unter die Ebene der Aufspannfläche abgesenkt, damit die Klebeverbindung gelöst wird und das Werkstück abgenommen werden kann. Die Bewegung der Klebefolie kann mechanisch beispielsweise über einen Exzenterantrieb 8 oder hydraulisch bzw. pneumatisch erfolgen.

Fig.1

## Vorrichtung zum Aufspannen von Werkstücken

Die Erfindung betrifft eine Vorrichtung nach dem Oberbegriff des Patentanspruches 1.

Derartige Vorrichtungen sind in den unterschiedlichsten Ausgestaltungen bekannt. Es gibt sog. Vakuumspannvorrichtungen, bei denen in dem Grundkörper Öffnungen oder Schlitze vorgesehen sind, die mit Vakuum beaufschlagt werden und das Werkstück ansaugen. Auch sind entsprechende Spannvorrichtungen bekannt, die magnetisch oder lediglich mechanisch arbeiten.

Es treten aber immer wieder Probleme insbesondere bei besonders gestalteten Werkstücken oder bei Werkstücken aus bestimmten Materialien auf, d.h. das Aufspannen ist entweder gar nicht möglich oder nicht sicher. Wenn es sich beispielsweise um poröses Material handelt, kann das Vakuum nicht aufrechterhalten werden. Wenn die Werkstücke kompliziert gestaltet sind, so fällt die Abdichtung gegen das Vakuum schwer. Nicht magnetisierbare Werkstoffe lassen sich mit magnetischen Vorrichtungen nicht aufspannen. Mechanische Vorrichtungen sind häufig nicht einsetzbar, da sie die Oberfläche empfindlicher Werkstücke beschädigen.

Der Erfindung liegt daher die Aufgabe zugrunde, eine Vorrichtung der eingangs genannten Art zu schaffen, die einfach aufgebaut ist und dennoch ein sicheres Aufspannen der zu bearbeitenden Werkstücke ermöglicht. Hierbei soll das Auf- und Abspannen schnell und einfach erfolgen und die Vorrichtung entsprechend häufig einsetzbar sein.

Diese Aufgabe wird grundsätzlich durch das Kennzeichen des Anspruches 2 gelöst, wobei diese Vorrichtung in vorteilhafter Weise so ausgestaltet ist wie in Anspruch 2 angegeben.

Erfindungsgemäß wird eine an sich bekannte Klebefolie oder ein entsprechendes Klebematerial verwendet, das mehrfach benutzt werden kann und beispielsweise abwaschbar ist. Dadurch, daß die Klebefolie oder die Klebefolien entsprechend bewegbar sind, nehmen sie das Werkstück in ihrer Stellung oberhalb der Aufspannfläche auf und es wird für die klebende Verbindung zwischen Werkstück und Klebefolie gesorgt. Wenn diese Verbindung beispielsweise durch Andrücken hergestellt ist, wird die Klebefolie soweit abgesenkt, daß das Werkstück auf der Aufspannfläche aufliegt, so daß bei der Bearbeitung ein entsprechendes Widerlager vorhanden ist. Die klebende Fläche der Klebefolie liegt dann praktisch in der Ebene der Aufspannfläche, so daß das Werkstück sicher gehalten wird, die Abstützung aber durch den Grundkörper erfolgt. Wenn das Werkstück fertig bearbeitet ist, und die Aufspannung gelöst werden soll, wird die Klebefolie unter das Niveau der Aufspannfläche bewegt, so daß die Klebeverbindung automatisch gelöst und das Werkstück abgenommen werden kann. Die Klebefolie wird dann wieder auf eine Ebene oberhalb der Aufspannfläche bewegt, wo sie zur Aufnahme des nächsten Werkstückes bereit ist. Eine derartige Vorrichtung kann auch für kompliziert gestaltete Werkstücke eingesetzt werden, da es unerheblich ist, ob sämtliche Klebeflächen der Klebefolien von dem Werkstück bedeckt werden oder nicht, wie dieses bei Vakuumspannvorrichtungen der Fall ist. Auch können Werkstücke aus nicht magnetisierbaren und porösen Materialien aufgespannt werden.

In den Ansprüchen 3 bis 5 ist eine bevorzugte Ausführungsform beansprucht, bei der die Klebefolien mechanisch bewegt werden.

In den Ansprüchen 6 und 7 ist eine andere Ausführungsform unter Schutz gestellt, bei der die Bewegung der Klebefolie pneumatisch oder hydraulisch erfolgt.

Im folgenden wird die Erfindung unter Hinweis auf die Zeichnung anhand zweier Ausführungsformen näher erläutert.

Es zeigt:

Fig. 1 eine teilweise geschnittene Seitenansicht einer ersten Ausführungsform einer Vorrichtung nach der Erfindung;

Fig. 2 eine Draufsicht auf die Ausführungsform nach Fig. 1;

Fig. 3 einen Querschnitt durch die Ausführungsform nach Fig. 1 und 2 im verggrößerten Maßstab;

Fig. 4 eine Teilansicht der Ausführungsform nach den Fig. 1 bis 3, bei der die Klebefolie sich in einer Stellung oberhalb der Aufspannfläche befindet;

Fig. 5 eine der Fig. 4 entsprechende Ansicht, bei der die Klebefolie sich in einer Stellung in der Aufspannfläche befindet;

Fig. 6 eine den Fig. 5 und 6 entsprechende Ansicht, bei der die Klebefolie sich unterhalb der Aufspannfläche befindet;

Fig. 7 eine schematische Ansicht im Schnitt einer anderen Ausführungsform, bei der die Klebefolie pneumatisch oder hydrau lisch bewegt wird und sich oberhalb der Aufspannfläche befindet;

Fig. 8 eine der Fig. 7 entsprechende Ansicht, bei der sich die Klebefolie jedoch in der Ebene der Aufspannfläche befindet; und

Fig. 9 eine den Fig. 7 und 8 entsprechende Ansicht, bei der die Klebefolie sich aber unterhalb der Ebene der Aufspannfläche befindet.

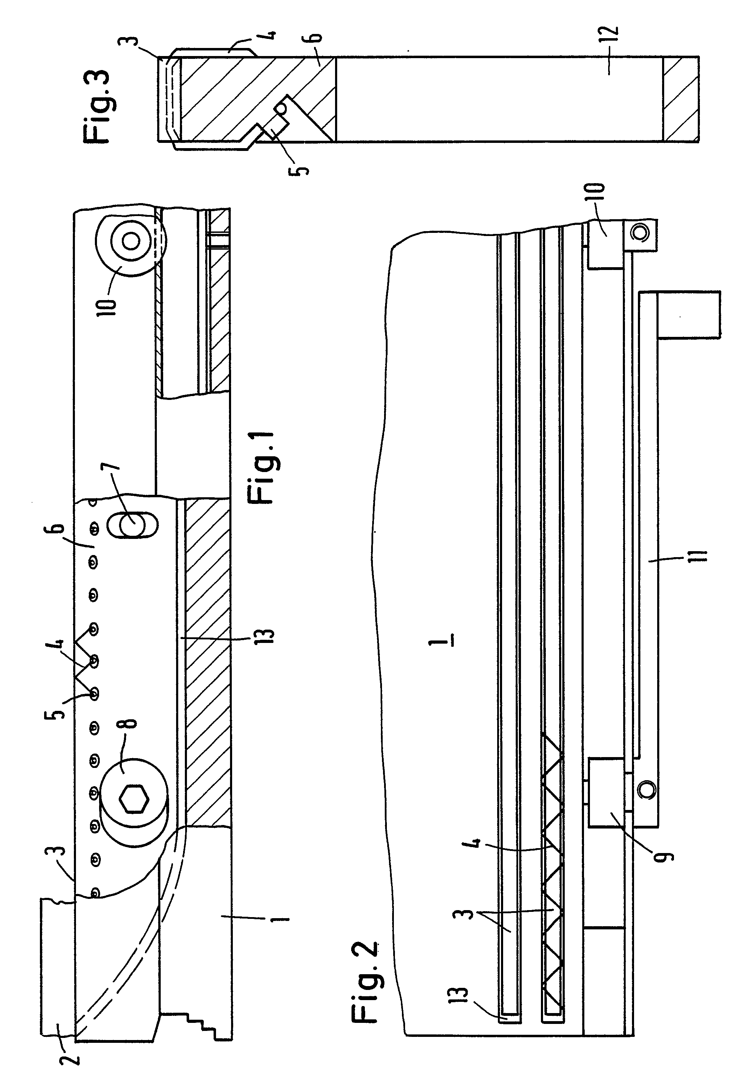

Die in den Figuren 1 bis 6 dargestellte Vorrichtung besteht aus einem Grundkörper 1, in dem eine Anzahl paralleler Schlitze 13 ausgebildet sind. In jedem Schlitz ist eine Leiste 6 so gelagert, daß sie auf-und abbewegt werden kann.

Die Auf-und Abbewegung erfolgt über Exzenter 8. Die Exzenterwellen werden über Ritzel 9 und 10 gedreht. Die Ritzel 9 und 10 sind durch eine nicht gezeigte Zahnstange miteinander verbunden. Der Antrieb erfolgt über eine Handkurbel 11. Eine Führung 7 stellt sicher, daß sich die Leisten 6 lediglich auf und ab und nicht seitlich bewegen.

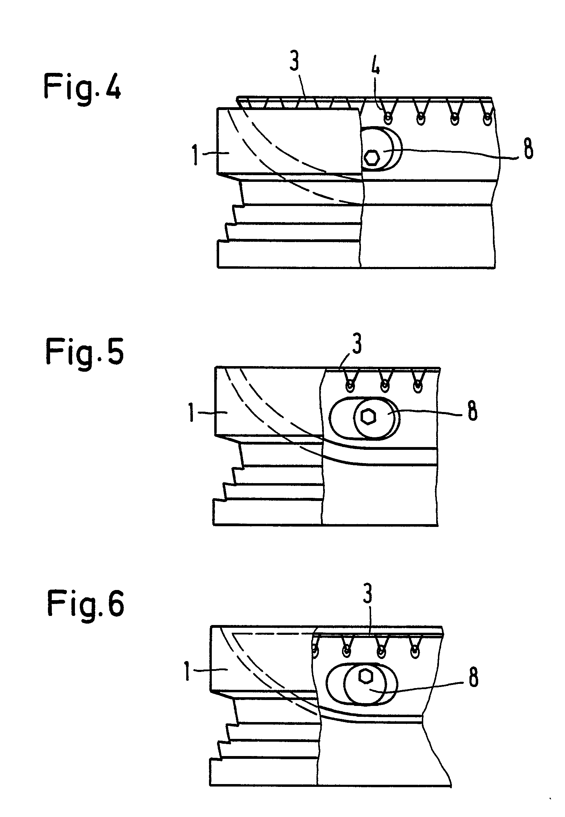

Auf jeder Leiste ist auf der oberen Oberfläche eine streifenförmige Klebefolie 3 befestigt und zwar mit Hilfe von Fäden 4, die um Zapfen 5 geschlungen sind, wie sich am besten beim Betrachten der Fig. 3 ergibt. Das in Fig. 3 erkennbare Langloch 12 dient der Aufnahme des Exzenters 8. Die Fäden sind in die Klebefolien eingedrückt, so daß sie unterhalb der Oberfläche der Klebefolien liegen, wie sich ebenfalls beim Betrachten der Fig. 3 ergibt.

Um ein Werkstück aufzuspannen, wird die Vorrichtung in die Stellung nach Fig. 4 gebracht. Die Klebefläche der Klebefolie ist bereit, ein Werkstück 2 aufzunehmen. Dieses wird aufgelegt und angedrückt. Die Leisten 6 mit den Klebefolien 3 werden dann in die Stellung nach Fig. 5 bewegt, in der die klebende Fläche in der Ebene der Aufspannfläche liegt. Die Aufspannfläche stützt das Werkstück 2 und die klebende Fläche hält es fest. Wenn das Werkstück fertig bearbeitet ist, wird die Leiste 6 mit der Klebefolie in die Stellung nach Fig. 6 bewegt, d.h. die klebende Fläche liegt unterhalb der Aufspannfläche, so daß die Klebeverbindung. zwischen Werkstück und Klebefolie automatisch gelöst wird. In den Fig. 4 bis 6 ist auch die unterschiedliche Stellung des Exzenters 8 erkennbar.

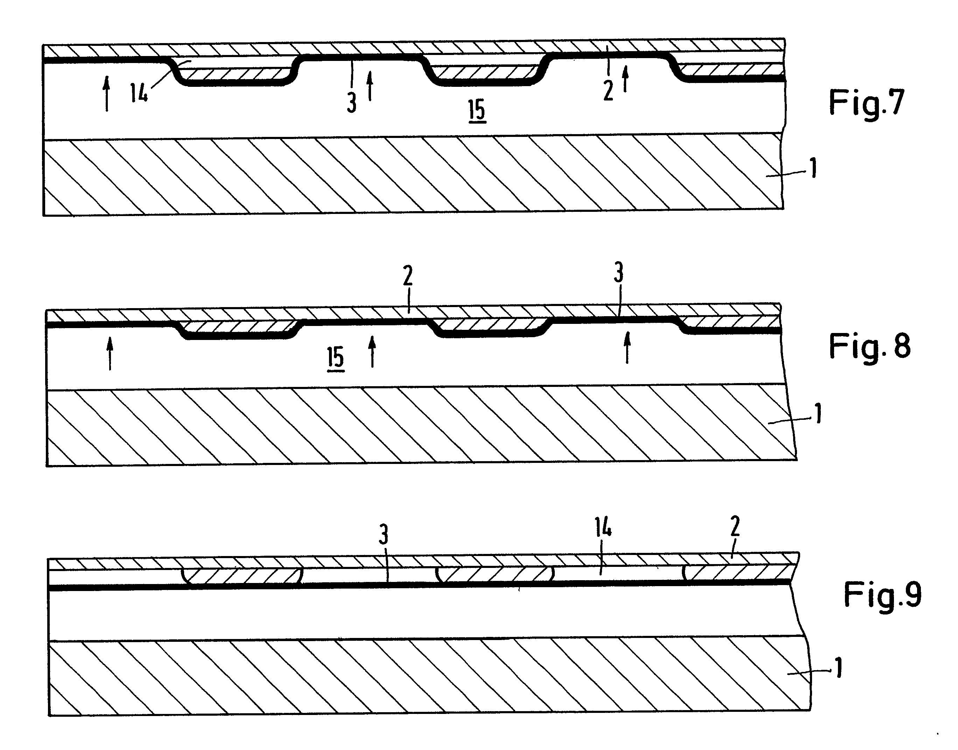

Bei der Ausführungsform nach den Fig. 7 bis 9 wird die Folie hydraulisch oder pneumatisch bewegt. Zu diesem Zweck sind in der Aufspannfläche eine Vielzahl von Öffnungen oder Schlitzen 14 vorgesehen, von denen mehrere jeweils eine entsprechende Reihe in der Oberfläche der Aufspannfläche bilden. Die Klebefolie 3 liegt in einem Druckraum 15 unterhalb der die Öffnungen 14 aufweisenden Aufspannfläche.

In der Stellung nach Fig. 7 ist der Druckraum 15 mit Druckmittel gefüllt, so daß die Klebefolie 3 über die Ebene der Aufspannfläche gedrückt wird und die Klebeverbindung zwischen Werkstück 2 und Klebefolie 3 hergestellt werden kann. Der Druck in dem Druckraum 15 wird dann soweit herabgesetzt, daß die klebende Fläche der Klebefolie 3 in der Ebene der Aufspannfläche liegt (siehe Fig. 8). In dieser Stellung wird das Werkstück gehalten, gleichzeitig bildet die Aufspannfläche ein starres Widerlager, so daß die Bearbeitung durchgeführt werden kann.

Wenn dann das Werkstück abgenommen werden soll, wird der Druck in dem Druckraum 15 weiter abgesenkt, so daß die Klebefolie die Stellung nach Fig. 9 einnimmt.

Es ist leicht erkennbar, daß im Rahmen der Erfindung andere Ausgestaltungen möglich sind, bei denen die Klebefolie aus einem Niveau oberhalb der Aufspannfläche zur Aufnahme und Befestigung des Werkstückes bis schließlich in ein Niveau unterhalb der Aufspannfläche -und natürlich zurück -bewegbar ist, um das fertig bearbeitete Werkstück abnehmen zu können.

## Ansprüche

1. Vorrichtung zum Aufspannen von Werkstücken mit einem Grundkörper und mit Spannmitteln zum Halten des Werkstückes auf der Aufspannfläche des Grundkörpers, dadurch gekennzeichnet, daß die Spannmittel durch mehrfach benutzbare Klebefolien (3) gebildet sind, die aus einer Stellung oberhalb der Aufspannfläche des Grundkörpers (1) in eine Stellung unterhalb dieser Aufspannfläche bewegbar sind.

2. Vorrichtung nach Anspruch 1, dadurch gekennzeichnet, daß die Klebefolien (3) bevorzugte Stellungen einnehmen; eine oberhalb der Aufspannfläche, einė in der Aufspannfläche und eine unterhalb der Aufspannfläche.

3. Vorrichtung nach Anspruch 1 oder 2, dadurch gekennzeichnet, daß die Klebefolien (3) auf einzelnen Leisten (6) befestigt sind, die in dem Grundkörper (1) gelagert und relativ zu der Aufspannfläche auf-und abbewegbar sind.

4. Vorrichtung nach Anspruch 3, dadurch gekennzeichnet, daß die Leisten (6) gemeinsam durch einen Exzenterantrieb (8) auf-und abbewegbar sind.

5. Vorrichtung nach Anspruch 3, dadurch gekennzeichnet, daß die Klebefolien (3) an den Leisten (6) durch dünne Fäden (4) befestigt sind, die in die Oberfläche der Klebefolien eingedrückt sind.

6. Vorrichtung nach Anspruch 1 oder 2, dadurch gekennzeichnet, daß in der Aufspannfläche eine Vielzahl von Öffnungen (14) vorgesehen sind,

daß die Klebefolie (3) unter der Aufspannfläche angeordnet ist und aus elastischem Material besteht, und daß die Klebefolie pneumatisch oder hydraulisch durch die Öffnungen auf eine Ebene oberhalb der Aufspannfläche bewegbar ist.

7. Vorrichtung nach Anspruch 6, dadurch gekennzeichnet, daß die Klebefolie (3) angrenzend an die die Öffnungen (14) aufweisende Aufspannfläche einen pneumatischen oder hydraulischen Druckraum (15) in dem Grundkörper (1) begrenzt.

Fig.3

Fig.1

Fig.2

**Fig.4**

**Fig.5**

**Fig.6**

Fig.7

Fig.8

Fig.9

0 214 415